Europäisches Patentamt

European Patent Office

Office européen des brevets

(11) Publication number: **0 401 178**
**A1**

## (12) EUROPEAN PATENT APPLICATION

(21) Application number: **90830236.7**

(22) Date of filing: **25.05.90**

(51) Int. Cl.5: **F01N 3/26, F01N 3/38**

(30) Priority: **02.06.89 IT 943989**

(43) Date of publication of application:
**05.12.90 Bulletin 90/49**

(84) Designated Contracting States:
**DE ES FR GB SE**

(71) Applicant: **Giani, Bruno**
**Via S.Niccolò No.81**
**I-50125 Firenze(IT)**

(72) Inventor: **Giani, Bruno**
**Via S.Niccolò No.81**
**I-50125 Firenze(IT)**

(74) Representative: **Mannucci, Gianfranco,**
**Dott.-Ing.**
**Ufficio Tecnico Ing. A. Mannucci Via della**
**Scala 4**
**I-50123 Firenze(IT)**

(54) **Exhaust head for internalcombustion engines, able to eliminate unburnt combustion residues.**

(57) The eshaust head (3) is apt to reduce or even eliminate unburnt or, anyhow, polluting combustion residues and comprises, in a portion of the gas path having oversized cross-section and thus in which the gases have reduced speed, electrical resistances (12) which are kept at a temperature suitable for triggering the combustion of the combustible residues in order to eliminate the unburnt residues.

FIG.1

EP 0 401 178 A1

The object of the invention is to provide a waste-gas exhaust head (or muffler) for internal-combustion engines, especially for automotive engines, which is apt to reduce unburnt or anyhow polluting combustion residues, thereby solving many ecological problems.

Substantially, the present exhaust head comprises, in a portion of the gas path having enlarged cross-section, and thus in which the gases have reduced speed, means able to trigger the combustion of the combustible residues eliminating the unburnt products out of the exhaust gas.

In practice, said heated means are uncovered electrical resistances which come in contact with the exhaust gas.

In an advantageous embodiment, the housing of the exhaust head is thermally insulated - mostly with refractory material - owing to the presence of high internal temperatures due to said electrical resistances; an exhaust pipe leads into said housing and a terminal exhaust pipe, for the gases which have gone through the same housing, extends therefrom.

Provision may be made for the exhaust pipe to enter the housing and go therethrough with an insulated length leading up to the end of the housing opposite to that from which the terminal exhaust pipe extends.

Within the housing - which may be cylindrical -there may be provided at least two arcuated electrical resistances formed of spiral wire, transversally disposed to the exhaust gas flow to come in contact therewith; the wires extend partially around the exhaust pipe which goes into the housing parallel to the axis thereof.

The invention will be better understood by following the description and the attached drawing, which shows a practical, non limiting example of the same invention. In the drawing:

Fig. 1 shows a longitudinal section of an exhaust head according to the invention;

Figs. 2 and 3 show two cross-sections on lines II-II and III-III of Fig. 1.

According to what is shown in the attached drawing, mumeral 1 indicates the connection of the exhaust pipe coming from an internal-combustion engine, such as a petrol or other liquid fuel-powered engine, especially an automotive engine. Numeral 3 generically indicates the exhaust head which is developed with a peripherical skirt 5 made of metal sheet and having an internal lining of refractory material and of such a thickness as to ensure a thermal insulation, thereby reducing external heat losses and keeping the temperature of the matal skirt 5 within acceptable limits. 7A and 7B indicate two end portions made of refractory material which complete the above mentioned insulation. The end portion 7B may be built in the form of a mobile bottom to allow access both for the assembly and for the inspection and control of the internal members of the exhaust head. Numeral 9 indicates the housing with the refractory lining 7, 7A, 7B for the transit of the gases. The cross-section of housing 9 is much larger than the cross-section of both the connection 1 for the exhaust pipe coming from the engine, and of the one of the terminal pipe 10 for the final discharge. The connection 1 for the incoming exhaust gases goes through the end plate 7A and proceeds with a portion 1A parallel to the axis of the exhaust head and, in particular, of the housing 9, but is out of alignment with respect to the said axis; this extension with the portion 1A is also advantageously made of refractory material. The portion 1A ends close to the end plate 7B of the housing of the exhaust head 3, while the terminal 10 is placed near the end plate 7A. As a consequence, the exhaust gases travel the portion 1A within the housing 9, from the jointing connection 1 up to one end of the housing 9 and then flow back in opposite direction the full extension of the housing 9 to reach the exhaust terminal 10. The area of the housing 9 which is crossed by the gases, has a very large cross-section, notwithstanding the presence of portion 1A inside the exhaust pipe, thereby reducing the gas speed within the housing.

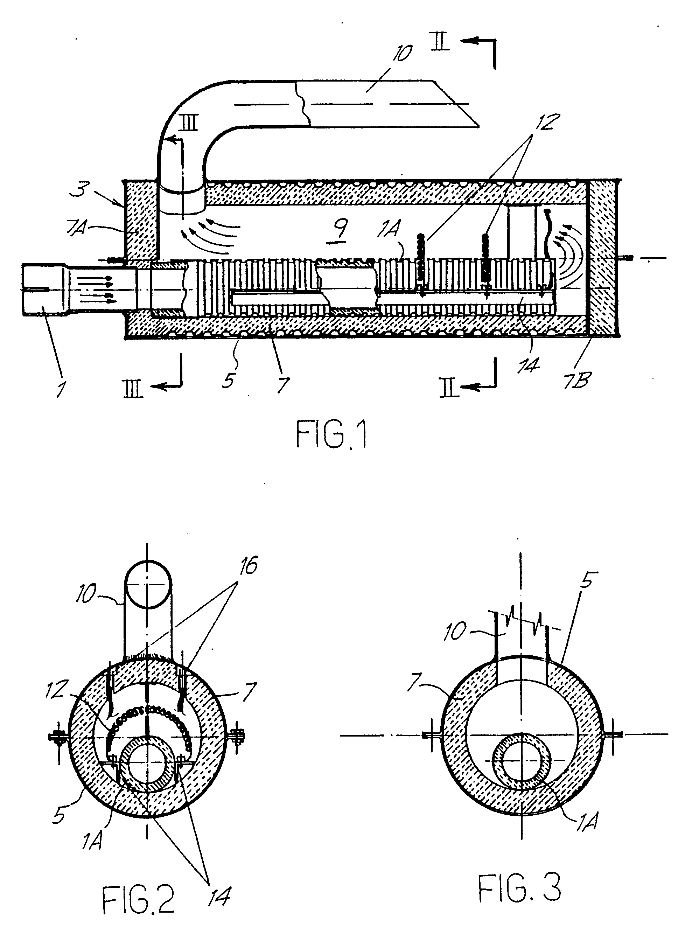

Within the housing 9 at least two electrical incandescence resistances are provided, each of which is developed trasverse to the gas flow inside housing 9 and mostly are preferably arch-shaped as clearly shown in Fig. 2, in order to be struck by the gases which flow trasversally to the resistances development. The resistances 12 may be, in practice, coil resistances which may be heated up at least to the red colour and, anyway, to such a temperature as to trigger the combustion of residual products possibly present in the exhaust gases. The unburnt products, therefore, burns before being discharged through the terminal pipe 10, thereby eliminating the presence of pollutants in the exhaust gases which are discharged into the atmosphere.

The resistances 12 may be supported by structural shapes 14 which are disposed side-by-side and sustain, likewise support brackets, the length 1A of the exhaust pipe which is inside the housing 9. The metal shapes 14 may form electrical conductors to supply the resistances 12 from connectors like those indicated by 16 (see Fig. 2) which provide an external connection for the supply of the electrical resistances; the latter being supplied by the on-board system in case of application on motor vehicles.

The presence of the refractory insulation 7, 7A, 7B is suitable both for avoiding heat losses and for keeping a high temperature within the housing 9, where the resistances 12 must provide for an elevated temperature and where the temperature is increased also by the combustion of the unburnt products coming from the exhaust gases of the engine. Such residues are thus eliminated, as already set forth, before being discahrged and scattered outside.

A different conformation of the exhaust head may be provided as far as the fumes path is concerned. The heating means may also be different. For example, provision may be made for a trigger operated by an electric arc or other.

## Claims

1. Exhaust head for exhaust gas of internal-combustion engines apt to reduce or eliminate unburnt or, anyhow, polluting combustion residues, characterized by comprising, in a portion of the gas path having enlarged cross-section and thus in which the gases have reduced speed, means able to trigger the combustion of the combustible products to eliminate unburnt products.

2. Exhaust head according to the preceding claim, characterized in that said means may be uncovered electrical resistances which come in contact with the exhaust gases, or other triggering systems.

3. Exhaust head according to any preceding claim, characterized by comprising a thermally insulated housing - especially with refractory material -provided with said electrical resistances, to which housing an exhaust pipe is connected and from which housing a terminal exhaust pipe extends for the gases which have gone through the same housing.

4. Exhaust head according to claim 3, characterized in that the exhaust pipe enters said housing and goes therethrough with an insulated portion to lead into the end of the housing opposite to the one from which the terminal exhaust pipe develops.

5. Exhaust head according to any preceding claim, characterized by comprising within the housing - which has cylindrical development - at least two arcuated electrical resistances having spiral wire, disposed trasversally to the exhaust gas flow to be struck there from; the filaments partially developing around the exhaust pipe entering the housing parallel to the axis thereof.

FIG.1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2098887 (J. KAFCSAK) <br> * the whole document * <br> --- | 1-4 | F01N3/26 <br> F01N3/38 |
| X | US-A-4077888 (RHOADES ET AL.) <br> * the whole document * <br> --- | 1-3 | |
| X | GB-A-1396607 (N.B. CULP) <br> * the whole document * <br> --- | 1-3 | |
| X | US-A-3043096 (J.H. MCLOUGHLIN) <br> * column 2, line 47 - column 4, line 18; figures 1, 2 * <br> ----- | 1, 3 | |
| | | | TECHNICAL FIELDS SEARCHED (Int. Cl.5) |
| | | | F01N |

The present search report has been drawn up for all claims

| Place of search | Date of completion of the search | Examiner |
|---|---|---|
| THE HAGUE | 11 SEPTEMBER 1990 | HAKHVERDI M. |